# EUROPÄISCHE PATENTANMELDUNG

(11) **EP 0 610 663 A1**
(43) Veröffentlichungstag der Anmeldung: **17.08.1994**
(21) Anmeldenummer: 94100273.5
(22) Anmeldetag: 11.01.1994
(51) Int. Cl.: G01N 21/78, G01N 31/22

(54) **Vorrichtung für den kolorimetrischen Gasnachweis in Folienverbundbauweise**

(30) Priorität: 10.02.1993 DE 4303861
(71) Anmelder: DRÄGERWERK AKTIENGESELLSCHAFT, D-23558 Lübeck (DE)
(72) Erfinder: Bäther, Wolfgang, Dr., D-23558 Lübeck (DE); Bommer, Rainer, D-23562 Lübeck (DE)

(57) **Zusammenfassung**

Ein Träger für ein oder mehrere kanalförmig in diesen Träger eingearbeitete Reaktionszonen, welche jede mit einem Farbindikator ausgekleidet ist, soll derart verbessert werden, daß eine einfach durchzuführende, individuell veränderbare Belegung der Reaktionszonen mit den erforderlichen, unter Umständen unterschiedlichen Indikatoren bei gleichmäßiger Belegungsdichte verwirklicht werden kann. Dies erfolgt durch einen Träger, der in ein Oberteil (2) und ein Unterteil (3) aufgeteilt ist, zwischen denen ein sandwichartiger Folienverbund (4) aufgenommen ist. Eine Reagenzträgerfolie (12) ist mit den Reaktionszonen versehen, und mit einer Kanalfolie abgedeckt, welche die Reaktionszonen kanalförmig begrenzt. Eine besonders günstige Ausbildungsform für die Reaktionszonen ist in Form einer Lochmatrix (12) verwirklicht, in die Trägerkugeln (13) aufgenommen sind, welche mit dem Indikator imprägniert sind.

## Beschreibung

Die Erfindung betrifft eine Vorrichtung zum kolorimetrischen Nachweis von gas- und/oder dampfförmigen Komponenten in einem Gasgemisch, welches in eine oder mehrere kanalförmig in einen Träger eingearbeitete Reaktionszonen dringt, auf deren Grundfläche ein Farbindikator aufgebracht ist, mit dem die nachzuweisende Komponente eine Farbreaktion eingeht.

Eine derartige Vorrichtung ist aus der DE-PS 39 02 402 bekanntgeworden.

Bei der bekannten Vorrichtung sind kanalförmige Vertiefungen in einen Träger eingearbeitet, die jeweils einen Farbindikator und zusätzliche Reaktionsteilnehmer für die kolorimetrische Nachweisreaktion enthalten. Dabei können die Reaktionsteilnehmer in jedem der Kanäle identisch oder auch unterschiedlich sein, je nachdem, ob ein mehrfacher Nachweis derselben Gaskomponente, oder von unterschiedlichen Gaskomponenten in Luft durchgeführt werden soll. Jeder der Kanäle besitzt mindestens eine Zutrittsöffnung für den nachzuweisenden Schadstoff, der entweder durch den Kanal hindurchgesaugt wird oder in den Kanal hineindiffundiert. Jeder einzelne Kanal wirkt somit wie ein herkömmliches Einzelprüfröhrchen für den kolorimetrischen Nachweis von gasförmigen Komponenten in Luft. Durch die Anordnung mehrerer parallel angeordneter Kanäle auf dem Träger erhält man in miniaturisierter Form ein Mehrfachmeßgerät für den kolorimetrischen Nachweis von gasförmigen Schadstoffen. Der chipförmige Träger wird über ein optoelektronisches Abtastgerät ausgewertet. Dazu wird automatisch eine Sender- und Detektoreinheit auf gleicher Höhe und in identischer Erstreckung zu jedem der Einzelkanäle geführt, und das von der verfärbten Kanalzone reflektierte Licht ausgewertet. Die Länge der Verfärbungszone gibt Auskunft über die in der Nachweisprobe enthaltene Konzentration oder Menge der untersuchten Gaskomponente, je nachdem ob die Kanäle als Prüfröhrchen in Durchströmung oder als Dosimeter mittels Diffusion des Schadstoffes ausgelegt sind.

Bei der bekannten Vorrichtung sind die Reaktionszonen als Kanäle in das Grundmaterial des Träger-Werkstoffes in Form von Ausnehmungen mit geringer Tiefe hergestellt. Die nachträgliche Beschichtung bzw. Belegung der Kanalvertiefungen ist nur unter erschwerten Fertigungsbedingungen möglich und ergibt ein unbefriedigendes Ergebnis im Hinblick auf eine möglichst gleichmäßige Verteilung der Reaktionspartner, insbesondere des Farbindikators längs der gesamten Streckenführung der Kanalvertiefungen. Dies ist besonders dadurch begründet, daß das Einbringen der Reaktionspartner aus einer flüssigen Emulsion geschieht, so daß in den Kanalvertiefungen, durch Oberflächenspannungen der Flüssigkeit und durch ungleichmäßige Verteilung der festen Bestandteile in der Suspension bedingt, unregelmäßig dichte Verteilungen der Reaktionspartner innerhalb der Kanalführung auftreten. Diese Problematik wird noch verschärft, wenn in den verschiedenen Kanälen unterschiedliche Reagenzträger zum Nachweis von verschiedenartigen Gaskomponenten eingesetzt werden, so daß auch unterschiedliche Suspensionen mit verschiedenen Oberflächenspannungen und unterschiedlichen, in den Suspensionen verteilten festen Reaktionsträgern verwendet werden. Eine ungleichmäßige Verteilung der Reaktionspartner längs der Kanalführung ergibt eine schwankende Verfärbungsanzeige, die eben nicht durch den nachzuweisenden Schadstoff verursacht ist, und die somit zu einer Verfälschung des Meßergebnisses führt.

Der vorliegenden Erfindung liegt somit die Aufgabe zugrunde, einen Träger der genannten Art so zu verbessern, daß eine einfach durchzuführende, individuell veränderbare Belegung der Reaktionszonen mit den erforderlichen, unter Umständen unterschiedlichen Indikatoren bzw. Adsorbentien bei gleichmäßiger Belegungsdichte verwirklicht werden kann. Dabei soll auf die Möglichkeit einer vollständigen Umsetzung des nachzuweisenden Schadstoffes an den Farbindikatoren bzw. Sammlung in den Adsorbentien besonderer Wert gelegt werden.

Die Lösung der Aufgabe erfolgt dadurch, daß die die Reaktionszone enthaltende Grundfläche als ein sich längs der Reaktionskanäle erstreckendes Reagenzträgerband ausgeführt ist, auf welches der Indikator mit seinen zugehörigen Reagenzien flächig, dem Kanalverlauf folgend, aufgebracht ist, und die auf einem die übrigen Seitenwände des Reaktionskanals bildenden Kanalträger befestigt ist.

Durch die Aufteilung der zur Bildung des Nachweiskanals erforderlichen Elemente in für die Präparation der Auskleidung der kanalförmigen Reaktionszonen geeignete Baugruppen, nämlich in ein im wesentlichen flächiges Reagenzträgerband einerseits und ein die Seitenwände bildenden Kanalträger andererseits, kann eine für jeden einzelnen Arbeitsschritt optimierte Fertigungstechnologie benutzt werden. So kann die Reaktionszone auf dem Reagenzträgerband durch bekannte Techniken zur Aufbringung von Flüssigkeiten auf Oberflächen gebildet werden; dazu wird z.B. eine den Verlauf der Reaktionszone vorgebende Maske über das Reagenzträgerband gelegt und die freibleibenden Ausschnitte der Maske werden mit der für den entsprechenden Nachweis notwendigen Flüssigkeit ausgefüllt, welche nach Verdunstung oder Abtrocknung der Lösungsmittel die Reaktionspartner, insbesondere den Farbindikator, in fester Form zurückläßt. Nach Entfernung der Maske bleibt die Reaktionszone als Spur auf dem Reagenzträgerband zurück. Probleme mit unterschiedlichen Oberflächenspannungen oder ungenügend gleichmäßiger Verteilung der Reaktionspartner entlang der Reaktionszone werden eliminiert, da keine Beschränkung im Hinblick auf ein gleichmäßiges Aufbringen der Suspensionslösung durch Kanalwände hingenommen werden muß. Nach erfolgter Abtrocknung der Reaktionszone wird das Reagenzträgerband auf den Kanalträger, z.B. auf dessen Unterseite, aufgebracht, beispielsweise durch Klebung. Das Reagenzträgerband bildet mit seinen Reaktionszonen die jeweilige Grundfläche für einen Reaktionskanal, dessen Seitenwände durch den Kanalträger gebildet werden. Gegebenenfalls wird der Kanalträger noch mit einer dünnen Deckplatte versehen, durch die die Kanäle zur Umgebung hin und voneinander abgedeckt werden. Der Kanalträger kann aber auch schon selbst mit einer einstückigen Abdeckung für die Kanalwände versehen sein, so daß sich eine separate Deckplatte erübrigt.

Das Reagenzträgerband kann großflächig für mehrere Kanäle gleichzeitig als Grundfläche dienen, oder es kann streifenförmig für jeden Kanal einzeln die Grundfläche bilden, und muß dann auch als Einzelstreifen jeder für sich auf den Kanalträger, dem Kanalverlauf folgend, aufgebracht bzw. aufgeklebt werden.

Das Reagenzträgerband und/oder der Kanalträger können aus Kunststoff in Form von dünnen Plättchen (Materialdicke etwa 2mm) und aus geeignetem, für die Reagenzien resistenten Material bestehen, jedoch ist es besonders vorteilhaft, das Reagenzträgerband , den Kanalträger und gegebenenfalls eine zusätzliche, die Kanäle abdeckende Deckplatte, als dünne Folien auszubilden, die zu einem sandwichartigen Folienverbund zusammengefaßt sind. Die Kanalfolie besitzt Durchbrüche, die in ihrer Form und in ihren Abmessungen den Reaktionszonen entsprechen. Jede der Folien ist etwa 75 bis 100 Mikrometer dick. Als Folienmaterial kommen zweckmäßigerweise Glas, Kermaik, Metall oder transparente perfluorierte Kohlenwasserstoffe, wie z.B. Perfluorpropylenethylen (FEP) in Frage.

Zur Stabilitätserhöhung für das Reagenzträgerband und für den Folienverbund ist es günstig, den Träger aus einem stabilen Trägeroberteil und einem Trägerunterteil zusammenzusetzen, zwischen denen das Reagenzträgerband, mit oder ohne Deckplatte, bzw. der gesamte Folienverbund, ortsfest aufgenommen sind.

In allen Fällen muß zur kolorimetrischen Auswertung derjenige Bereich des Reagenzträgerbandes und/oder der Deckplatte sowie des Trägeroberteils für die die Auswertung erforderliche Strahlung durchscheinend sein. Genügt eine Auswertung durch den Benutzer, d.h. handelt es sich um eine mit dem Auge durchführbare Auswertung, dann ist die Strahlung das sichtbare Licht; ansonsten ist bei einem elektrischen Auswertegerät unter Verwendung von speziellem Infrarot- oder Licht besonderer Wellenlänge benutzenden Detektoren, für die Durchlässigkeit der entsprechenden Strahlung in bekannter Weise zu sorgen.

Eine Ausbildungsform in Folienverbundbauweise kann noch günstiger zu einer Vorrichtung zusammengebaut werden, da auch in diesem Fall nach erfolgter Abtrocknung der aus der Flüssigphase aufgebrachten Reaktionszone die Kanalfolie deckungsgleich zu dem Verlauf der Reaktionszonen auf die Reagenzträgerfolie aufgebracht wird, welche mittels ihrer Durchbrüche die Kanalwände neben jeder einzelnen Reaktionszone errichtet. Auch hierbei ist es von Vorteil, daß die Kanalstruktur in eine Folie eingearbeitet ist, da sie in einfacher Form als Folienausschnitt ausgebildet sein kann, die ihrerseits nicht mit dem Indikator ausgekleidet sein muß, und wobei die zwischen den jeweiligen Ausschnitten bzw. Durchbrüchen stehenbleibenden Stege einfach mit der darunterliegenden Reagenzträgerfolie zu einer Einheit verschweißt werden können, so daß benachbarte Kanäle voneinander bzw. zur Umgebung hin dicht abgeschlossen sind. Über die Kanalausschnitte wird die Deckfolie gelegt, die die Kanalwände abschließt. Anfang und/oder Ende der so gebildeten geschlossenen Kanäle sind mit einer Kanalöffnung versehen, über welche die nachzuweisende Komponente (z.B. ein Schadstoff) Zutritt zu den Reaktionszonen erhält. Die Kanalöffnungen können ihrerseits durch Folienmembranen abgedichtet sein, die dann gleichzeitig Bestandteil der zusätzlichen, über die Kanalfolie gezogenen Deckfolie sind. Diese Versiegelung wird beim Gebrauch des Trägers als Prüfröhrchen durchstoßen, was entweder mechanisch geschieht oder auch gleich beim Ansetzen einer Saugpumpe zur Durchströmung des Kanals, wie es z.B. aus dem Stand der Technik nach der DE-PS 39 02 402 bekannt ist.

Weitere Möglichkeiten, die Reaktionsemulsion auf die Reagenzträgerfolie aufzubringen, bestehen darin, daß vorpräparierte Streifen als Kanalflächen die Reaktionszone bilden. Dazu werden z.B. großflächige Tragermaterialien, wie Papier (Zellstoff), Kunststoffolie, mit dem Indikator imprägniert und anschließend in Streifen geschnitten, die dann auf das Reagenzträgerband geklebt werden oder selbst das Reagenzträgerband bilden. Die Imprägnierung erfolgt entweder direkt (z.B. auf Papier), oder es werden imprägniertes Silicagel oder Aluminiumoxid auf das Reagenzträgerband aus Glas oder Kermaik aufgebracht.

Weiterhin ist bei einem gattungsbildenden Träger die Lösung der Aufgabe dadurch möglich, daß er statt einer flächigen Reaktionszone eine oder mehrere, mit Reagenzien ausgekleideten Kapillarröhrchen besitzt, die auf das Reagenzträgerband aufgebracht sind. Dabei sind die Röhren mit einer Kanalfolie abgedeckt; an deren Enden besitzt die Kanalfolie mindestens einen (versiegelten) Kanalanschluß, durch den der nachzuweisende Schadstoff Zutritt zu der Kapillarröhre erhält. Die Kapillarröhren können auch auf das Reagenzträgerband aufgeklebt sein, so daß die Kanalfolie eher als Schutzabdeckung dient, und nur einen unbedeutenden Beitrag zur Befestigung der Röhren leistet. Die Kapillarröhren sind als Reaktionskanäle anzusehen, deren Auskleidung mit Reagenzien die Reaktionszonen bilden. Die in einem separaten Beschichtungsarbeitsgang ausgekleideten fertigen Kapillarröhren sind auf einfache Weise auf dem Reagenzträgerband aufbringbar.

Um die Gleichmäßigkeit der Verteilung der Reaktionspartner für die kolorimetrische Reaktion, insbesondere den Indikator selbst, entlang der Reaktionszone noch zu erhöhen und somit eine räumlich definierte Ausdehnung des Indikators zu erzeugen, damit beim Vorbeiführen eines mit der nachzuweisenden Gaskomponente angereicherten Trägergases eine möglichst reproduzierbare, quantitative chemische Umsetzung erlangt wird, hat es sich als günstig erwiesen, die Reaktionszonen auf der Reagenzträgerfolie als eine Lochmatrix darzustellen, in welche Trägerkugeln eingebracht sind, die ihrerseits mit dem Farbindikator imprägniert sind. Auf diese Weise hat man dem Indikator vordefinierte Aufnahmeplätze zugeordnet, so daß die Gleichmäßigkeit der Indikatorverteilung längs der Reaktionszone noch erhöht wird. Auch hier ist die Präparation der Reaktionszone selbst noch in weitere Fertigungsschritte aufgeteilt, die jeder für sich kontrolliert beherrschbar ist: nämlich zum einen das Anbringen bzw. Herstellen einer Lochmatrix, und zum anderen das Verteilen der imprägnierten Trägerkugeln in die vorgesehenen Löcher; dabei ist das Imprägnieren dieser Trägerkugeln selbst ebenfalls ein gut beherrschbarer und reproduzierbarer Fertigungsvorgang.

Da es bei der Miniaturisierung des Trägers und der damit einhergehenden Miniaturisierung von Prüfröhrchen bzw. Dosimeterröhrchen verstärkt auf die Gleichmäßigkeit und Reproduzierbarkeit der Verteilung der Reaktionspartner entlang des Kanalverlaufes ankommt, ist diese Ausbildung der Reagenzträgerfolie von ausschlaggebender Bedeutung. Dies gilt insbesondere für den Fall, daß mehrere Reaktionszonen zu einem Array auf einen chipförmigen Träger zusammengefaßt sind.

Als zweckmäßiger Lochdurchmesser hat sich die Größe von etwa 100 Mikrometer und als Kugeldurchmesser von etwa 125 Mikrometer erwiesen. Bei der Beladung einer derartigen Lochmatrix wird auf einer Seite dieser Folie ein Vakuum erzeugt, wodurch die kugelförmigen Träger in die Löcher gesaugt werden. Aufgrund dieser Selbstdichtung steigt der Unterdruck auf der vakuumseitigen Oberfläche der Folie bis zu ihrer vollständigen Beladung, wenn alle vorgegebenen Löcher belegt sind. Überschüssige Kugeln können mit Druckluft entfernt werden. Ein weiterer Vorteil der Lochmatrix besteht darin, daß zwischen den Trägerkugeln definierte Zwischenräume gebildet werden, welche einen reproduzierbaren Strömungswiderstand für die nachzuweisende Gasprobe durch den Strömungskanal erzeugen und einen intensiven Kontakt zwischen dem Schadstoffgas und dem Reagenzmaterial ermöglichen.

Die Trägerkugeln bestehen aus Silicagel, welches vorteilerhafterweise nach dem sogenannten Sol-Gel-Verfahren hergestellt ist. Bei der Anwendung des Sol-Gel-Verfahrens (EP-A-94 060 beschreibt ein derartiges Verfahren) zur Herstellung der Kugeln aus Silicagel erhält man den Vorteil, daß die Kugeln entsprechend den Erfordernissen leichter modifiziert werden können; so können notwendige Indikatoren in das Kugelvolumen unmittelbar eingebracht werden, wodurch eine homogenere Verteilung insbesondere auf der Kugeloberfläche erzielt wird. Es können auch weitere Chemikalien in die Kugelstruktur eingebaut werden, wie z.B. funktionelle Gruppen, die Indikatorsubstanzen immobilisieren, gewünschte hydrophobe Eigenschaften besitzen und auch eine gezielte Porosität verwirklichen.

Die Reagenzträgerfolie mit der Kanalfolie werden mittels einer Grundfolie und einer Schutzfolie gegen äußere Beschädigungen geschützt und machen die Handhabung während der Herstellung des vollständigen Trägers sicherer.

Günstige Materialien für die Trägerfolie bestehen entweder aus Keramik, Glas oder Metall. Als Kunststoffmaterial für die Folien hat sich auch PTFE bewährt. Werden sämtliche Folien aus dem gleichen Kunststoffmaterial hergestellt, ist eine zuverlässige thermische Verschweißung z.B. mittels Laserstrahl möglich.

Eine hervorragende Eigenschaft bezüglich der Haftfähigkeit für die aufzubringenden Substanzen und Indikatoren zeigt das Material Perfluorpropylenethylen (FEP), und dies umso erstaunlicher, als es eine Art PTFE ist, aber dennoch bessere Benetzungseigenschaften für die zumeist aus flüssiger Phase aufgebrachten polaren Reagenzien und Indikatoren/Substanzen zeigt. Auch die Handhabung dünnster Folien aus FEP führt nicht zum Abplatzen der Beschichtung für die Reaktionszonen.

Mehrere hintereinander liegende Teilbereiche in den Reaktionszonen sind zweckmäßigerweise dann vorzusehen, wenn für den nachzuweisenden Schadstoff keine direkt anzeigenden Farbreagenzien zur Verfügung stehen, oder wenn sie auf einfache Weise nicht langzeitstabil herstellbar sind. Für solche Fälle ist der Indikatorschicht eine Umwandlungsschicht vorzuschalten, die solche Reagenzien enthält, die die nachzuweisende Komponente auf chemischem Wege in Reaktionsprodukte zerlegt, von denen mindestens ein Reaktionsprodukt mit der nachfolgenden Indikatorschicht eine Farbreaktion eingeht. Zur Auswahl geeigneter Umwandlungsbereiche (Vorschichten) und Indikatorbereiche können die aus der herkömmlichen Prüfröhrchentechnik bekannten Reagenzien gewählt werden.

Die Folienverbundbauweise bzw. die Aufbringung von Reaktionszonen unterschiedlicher Nachweisempfindlichkeit auf einem Reaktionsträgerband kann auch dadurch vorteilhaft eingesetzt werden, daß auf einem Reagenzträgerband eine Vielzahl von flächigen (kreisförmig oder streifenförmig ausgebildeten) Reaktionszonen, mehrere Teilbereiche bildend, aufgetragen sind. Die Teilbereiche sind mit unterschiedlichen Indikatoren ausgestattet, die auf verschiedene nachzuweisende Komponenten durch entsprechend unterschiedliche Verfärbung reagieren. Die Reaktionszonen sind durch den Kanalträger entweder voneinander getrennt, oder alle Bereiche sind von dem Kanalträger lediglich zusammengefaßt umschlossen. In allen Fällen ist über den Kanalträger eine Deckfolie gelegt, die die Reaktionszonen von der Umgebung abtrennt. Zum Nachweis etwa vorhandener schädlicher Gaskomponenten in der Umgebung ist die Deckfolie einfach von dem Kanalträger abzuziehen, wodurch alle Reaktionszonen bzw. deren Teilbereiche gleichzeitig der Umgebungsatmosphäre ausgesetzt werden. Durch entsprechende Verfärbung der exponierten Reaktionszonen kann auf das Vorhandensein zugehöriger nachzuweisender Schadstoffe geschlossen werden. Die Verfärbungstiefe ist eine semi-quantitative Anzeige für die Schadstoffmenge.

Derartige Vorrichtungen werden unter der Bezeichnung "Prüfplakette" eingesetzt, um z.B. in einer zunächst unbekannten Schadstoffatmosphäre vorzutesten (screening), welche Schadstoffe überhaupt vorhanden sind und wenn ja, in welcher vermutlichen Konzentration, um anschließend mit genaueren, quantitativer anzeigenden Meßsystemen volle Gewißheit über Anwesenheit und Menge des vorliegenden Schadstoffes zu erhalten.

Eine weitere Möglichkeit, gas- oder dampfförmige Schadstoffe nachzuweisen, besteht darin, daß diese in einem Adsorbens zurückgehalten und gesammelt werden, um nach Abschluß der Probenahme auf chemischem oder physikalischem Wege von dem Adsorbens wieder entfernt und quantitativ bestimmt zu werden. Derartig ausgebildete Vorrichtungen dienen der Langzeitmessung, und werden als Sammelprüfgeräte (Sammelprüfröhrchen) oder Langzeitdosimeter bezeichnet.

Um die bekannte Vorrichtung in dieser Weise zu verbessern, daß eine einfache Befüllung der Kanäle mit den Adsorbentien möglich ist, werden offene Reaktionskanäle in den als Reaktionsträgerband ausgebildeten Träger mit dem Adsorbens gefüllt und mit einem die Kanäle abdeckenden Kanalträger zugedeckt, so daß die Kanäle voneinander und zur Umgebung hin versiegelt sind, wobei der jeweilige Kanalanschluß zugänglich bleibt.

Als Füllung kommt Aktivkohle wegen ihrer großflächigen Adsorberkapazität in Frage. Zur Auswertung wird die mit der nachzuweisenden Komponente beladene Aktivkohlefüllung aus dem/den Kanal/Kanälen entfernt und mit naßchemischen Verfahren analysiert und die adsorbierte Menge festgestellt. Um das Adsorbens leicht aus den Kanälen entfernen zu können, ist das Reagenzträgerband mit dem Kanalträger lösbar verbunden, so daß beide zur Entnahme des beladenen Adsorbens voneinander getrennt werden, worauf die gefüllten Kanäle offen zugänglich sind.

Andere geeignete Adsorbentien sind organische Polymere (z.B. Polyphenylenoxid, unter dem Handelsnamen TENAX erhältlich), oder Molekularsiebe (Zeolithe). Diese besitzen den Vorteil, daß die Adsorption der nachzuweisenden Komponente ausschließlich auf deren Oberfläche stattfindet, so daß sie leicht unter thermischer Einwirkung wieder desorbieren und einer Gasanalyse unterzogen werden können. Je nach Art und Adsorptionsfähigkeit der nachzuweisenden Komponente kann ein geeignetes Zeolith (Molekularsieb) gewählt werden; es können auch abwechselnde Schichtfolgen aus den Bestandteilen Aktivkohle, Tenax, Zeolith in die Kanäle gefüllt werden.

Ein Ausführungsbeispiel der Erfindung wird anhand der Figuren dargestellt und im folgenden näher erläutert.

Es zeigen:
- Fig. 1: die Ansicht eines chipförmigen Trägers mit mehreren Reaktionszonen,
- Fig. 2: einen Schnitt durch den Träger längs einer kanalförmigen Reaktionszone,
- Fig. 3: die Grundfolie bzw. die Deckfolie,
- Fig. 4: die Reagenzträgerfolie,
- Fig. 5: die Kanalfolie,
- Fig. 6: die Einzelansicht einer Reaktionszone in Form einer Lochmatrix,
- Fig. 7: den Schnitt durch die Lochmatrix nach Fig. 6,
- Fig. 8: ein aus Deckfolie, Kanalfolie, Reagenzträgerfolie und Grundfolie bestehender Folienverbund,
- Fig. 9: die Einzelansicht einer Reaktionszone in Form eines innenbeschichteten Kapillarrohres,
- Fig. 10: den Schnitt durch den Folienverbund mit mehreren Kapillarrohren,
- Fig. 11: die Ansicht einer Prüfplakette,
- Fig. 12: den Schnitt durch einen mit einem Adsorbens gefüllten Träger.

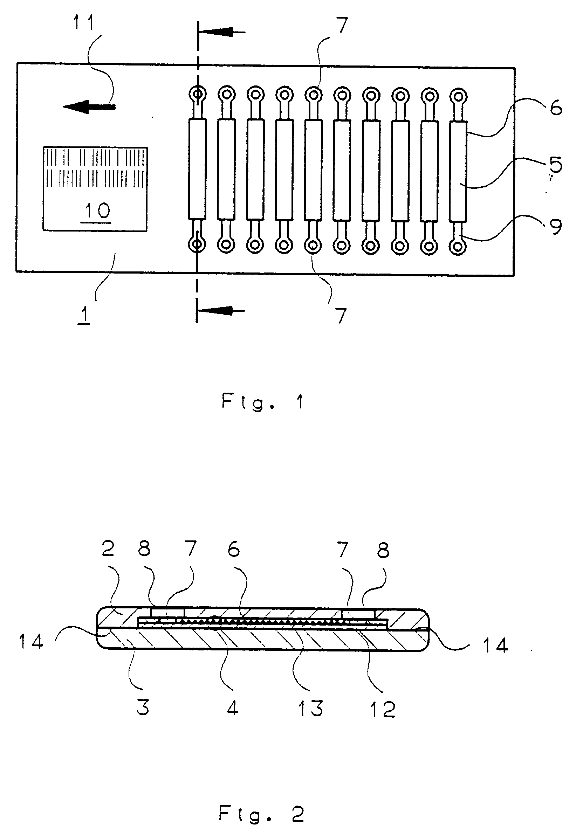

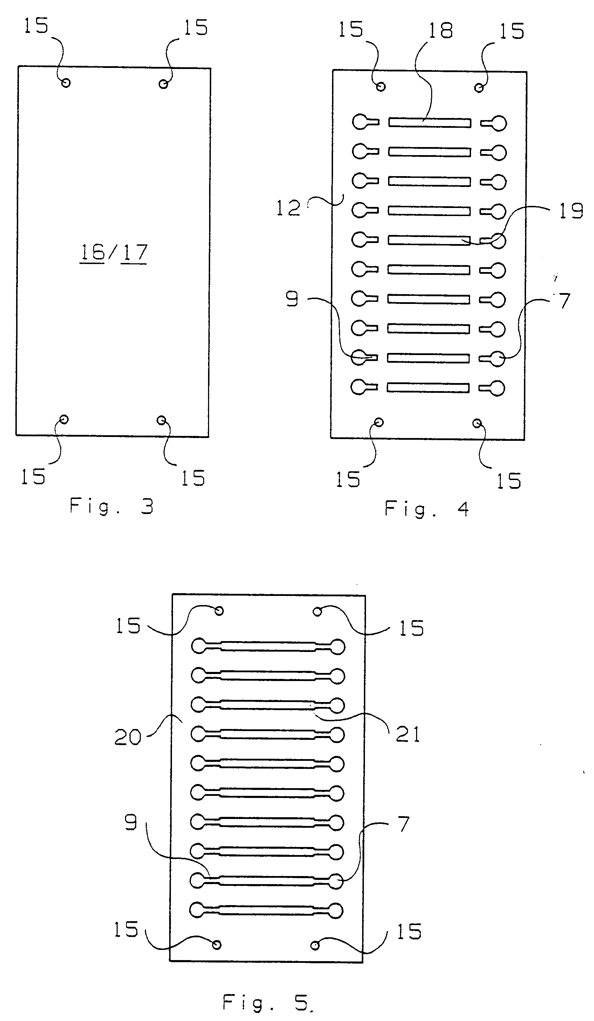

In Fig. 1 ist ein chipförmiger Träger (1) dargestellt, der aus einem Trägeroberteil (2) und einem Trägerunterteil (3), Figur 2, zusammengefügt ist, wobei zwischen den Teilen (2, 3) ein Folienverbund (4) eingespannt ist. Das aus durchsichtigem Kunststoffmaterial bestehende Oberteil (2) läßt den Blick frei auf zehn parallel verlaufende Reaktionszonen (5), welche als Bodenfläche für einen Reaktionskanal (6) ausgebildet ist. Endseitig zu den Kanälen (6) sind Zutrittsöffnungen (7) vorgesehen, durch die das nachzuweisende Gasgemisch entweder mit Hilfe einer nicht dargestellten Pumpe hindurchgesaugt, oder bei einseitiger Öffnung per Diffusion zu der Reaktionszone (5) längs des Kanals (6) migrieren kann. Die Zutrittsöffnungen (7) sind mit einer Versiegelung (8), Figur 2, verschlossen, die für die Durchführung einer Messung durchgestoßen werden. Die Zutrittsöffnungen (7) sind mit den Kanälen (6) über einen Kanalanschluß (9) verbunden. Auf der Oberfläche des Trägeroberteils (2) ist ein Datenfeld (10) aufgedruckt, welches technische Informationen und Handhabungshinweise für den Gebrauch des kolorimerischen Nachweisgerätes beinhaltet. Diese Informationen sind entweder vom Anwender lesbar oder mit Hilfe eines Barcodes durch eine nicht dargestellte Auswerteeinheit erfaßbar. Eine derartige Auswerteeinheit ist in der DE 39 02 402 beschrieben. Ein Richtungspfeil (11) gibt an, welche Seite des Trägers (1) zuerst in das Auswertegerät einzuschieben ist. Während des Einschiebens wird das Datenfeld (10) ausgelesen und die darin enthaltene Information an die Auswerteeinheit weitergegeben. Der Träger (1) wird soweit in die Auswerteeinheit vorgeschoben, bis der erste nicht benutzte Reaktionskanal (6) über die optische Auswerteeinheit gelangt. Diese enthält eine Anordnung von Strahlern und Empfängern, die mit einer bestimmten Wellenlänge entlang des Verlaufs der Reaktionszone (5) die Verfärbung abtastet. Gleichzeitig wird nach Durchstoßen der Versiegelung (8) eine Pumpe angeschlossen, die das zu untersuchende Meßgas durch den Kanal (6) hindurchsaugt. Je nach Gehalt der Gaskomponente in dem Meßgas verfärbt sich die Reaktionszone (5) mehr oder weniger weit. Dies wird durch die Auswerteeinheit erfaßt und zu einem Meßwert verarbeitet. Nach erfolgter Auswertung des ersten Kanals (6) erfolgt ein automatischer Transport zum benachbarten zweiten Kanal (6), dessen Auswertung in gleicher Weise wie beschrieben erfolgt. Auf diese Art können bei Bedarf bis zu zehn unterschiedliche Gase untersucht und gemessen werden.

Fig. 2 zeigt den Schnitt längs eines Kanals (6) aus dem Träger (1) nach Fig. 1, wobei der Folienverbund (4) eine Reagenzträgerfolie (12) in Form einer Lochmatrix enthält. Die Lochmatrix (12) hat eine definierte Anzahl von Trägerkugeln (13) aufgenommen, welche in dem Kanal (6) dem zu untersuchenden Gas ausgesetzt sind. Das Trägeroberteil (2) besitzt die über den Zutrittsöffnungen (7) befindliche Versiegelung (8), welche zum Anschluß beispielsweise einer nicht dargestellten Gasförderpumpe durchstochen werden. Über die Zutrittsöffnungen (7) gelangt das nachzuweisende Gas zu dem Kanal (6) und somit zu dem auf den Trägerkugeln (13) aufgebrachten Indikator. Das Trägeroberteil (2) ist mit dem Trägerunterteil (3) über eine Klebenaht (14) ringsum laufend verbunden, wodurch der Folienverbund (4) zwischen beiden Teilen (2, 3) eingeklemmt ist.

Die in Fig. 3 gezeigte Grundfolie besteht lediglich aus einer rechteckigen Folie aus Kunststoff mit vier Zentrier- bzw. Befestigungslöchern (15) in ihrem Eckbereich. Dieselbe Grundfolie (16) kann auch als Deckfolie (17) eingesetzt werden.

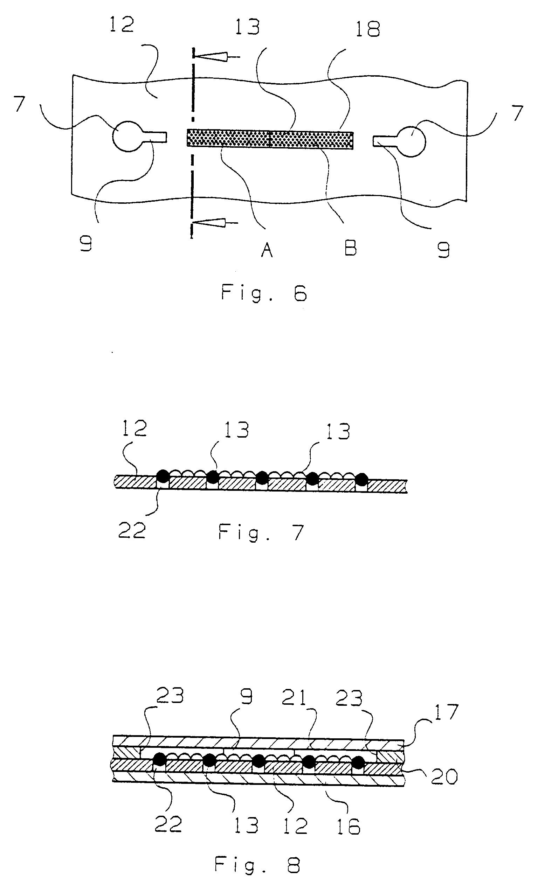

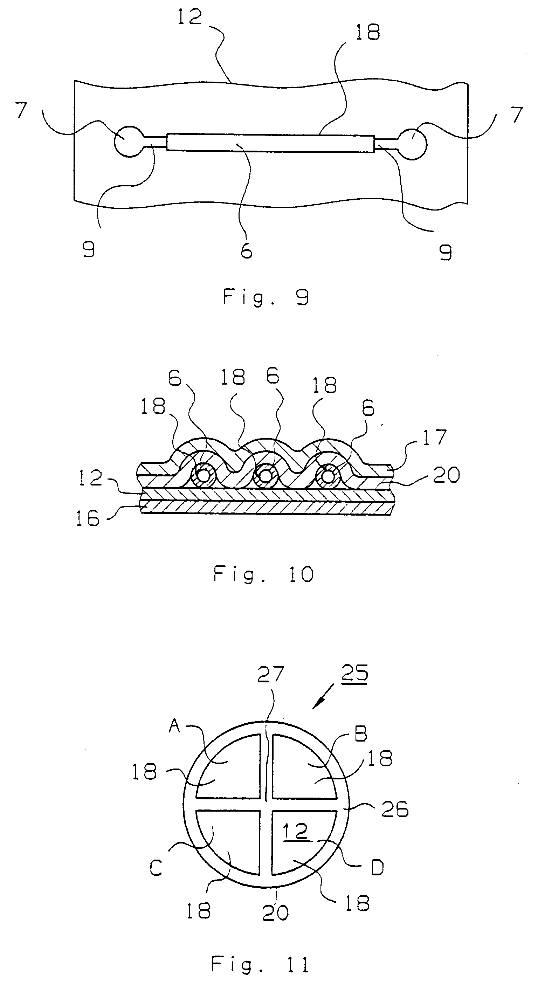

In Fig. 4 ist die Reagenzträgerfolie (12) aus FEP dargestellt, welche einzelne, parallel zueinander verlaufende Spuren als Reaktionszonen (18) aufweist, welche mit den für den kolorimetrischen Nachweis erforderlichen Reagenzien beschichtet sind. Die Reaktionszonen können entweder aus einer Beschichtung (19) an aus einer Suspension aufgebrachten Indikatorlösung bestehen, sie kann aber auch als eine mit Trägerkugeln (13), Figur 6, gefüllten Lochmatrix (18) ausgebildet sein. Die Reagenzträgerfolie (12) besitzt gleichfalls durchgestanzte Zutrittsöffnungen (7) mit zugehörigen Kanalanschlüssen (9). Als Positionierhilfen sind auf der Reagenzträgerfolie (12) ebenfalls Zentrierlöcher (15) deckungsgleich mit denen der Grundfolie (16) angebracht.

Die Kanalfolie (20) nach Fig. 5 weist in Übereinstimmung mit dem Verlauf der Reaktionszonen (18) Durchbrechungen (21) auf, die als Kanal für die zu untersuchende Gaskomponente dienen. Zu jedem der Kanäle (21) ist eine Verbindung mit der Zutrittsöffnung (7) über den Kanalanschluß (9) hergestellt. Die Durchbrechungen (21) des Kanals bilden später beim Auflegen der Kanalfolie (20) auf die Reagenzträgerfolie (12) die Kanalwände, auf die die Deckfolie (17) gelegt wird, und die somit die Kanäle (21) sowohl voneinander bzw. von der Umgebung abtrennt.

Ein Beispiel einer Lochmatrix (18) als Reaktionszone ist in Fig. 6 dargestellt, wobei ausschnittsweise nur eine einzige Reaktionszone (18) gezeigt ist. Die mit Trägerkugeln (13) gefüllte Lochmatrix (18) ist im Schnitt in Fig. 7 gezeigt, in welcher die Trägerkugeln (13) in den Löchern (22) der Reagenzträgerfolie (12) aufgenommen sind. Jede einzelne Reaktionszone (18) bildet eine einzelne Lochmatrix, aber auch die gesamte Regenzträgerfolie (12) kann als eine gesamte Lochmatrix angesehen werden. Die Reaktionszone (18) ist unterteilt in einen Teilbereich A und B, wobei der Teilbereich A eine Beschichtung trägt, die die zu untersuchende Komponente in ein solches Produkt chemisch umwandelt, das im strömungsmäßig nachfolgenden Teilbereich B eine Farbreaktion mit dem im Bereich B vorgesehenen Farbindikator eingeht (Teilbereich A ist als Umwandlungsschicht, Teilbereich B als Indikatorschicht anzusehen).

Das zu einem Folienverbund (4) zusammengefügte Paket aus Grundfolie (16), Reagenzträgerfolie (12) in Form einer Lochmatrix, Kanalfolie (20) und Deckfolie (17) ist in Fig. 8 gezeigt. Der Schnitt zeigt die Ansicht längs des Kanals (21) in Sicht auf die Öffnung des Kanalanschlusses (9). Wie man erkennt, ist der Kanal (21) seitlich durch die Wände (23) der in der Kanalfolie (20) vorgenommenen Durchbrüche gebildet, und die Kanaloberseite ist durch die Deckfolie (17) abgeschlossen. Die Reaktionszone (18) setzt sich zusammen aus der insgesamten Oberfläche einer jeden Trägerkugel (13), die in den Kanal (21) hineinragt.

Die Fig. 9 zeigt ein weiteres Beispiel für eine Reagenzträgerfolie (12), auf welcher eine Vielzahl von Kapillarröhren als Kanäle (6) mit einer Auskleidung (18) als Reaktionszone aufgebracht ist (nur eine davon ist dargestellt). Die Kapillarröhre (6) besitzt an ihren Endseiten jeweils den Kanalanschluß (9), welcher in die Zutrittsöffnung (7) mündet.

In Fig. 10 ist ein Teilschnitt durch den Folienverbund (4) gezeigt, auf dessen Trägerfolie (12) drei Kapillarröhren als Kanäle (6) gelegt sind, die mit einer Innenauskleidung (18) von Reagenzien beschichtet ist, die wegen des kleinen Darstellungsmaßstabes nicht separat gezeigt ist. Über die Röhrchen (6) ist die Kanalfolie (20) gelegt, welche sowohl die Röhrchen (6) als auch die Trägerfolie (12) abdeckt, bis auf diejenigen Flächenteile, welche die Zutrittsöffnungen (7) (Fig. 9) aussparen. Diese Flächenteile werden nachträglich mit einer Versiegelung (8) versehen (Fig. 2), die zum Gebrauch durchstoßen werden.

Fig. 11 zeigt die Ansicht einer Prüfplakette (25), auf deren Reagenzträgerband (12) die Reaktionszone (18) durch den Kanalträger (20) in vier Teilbereiche (A, B, C, D) aufgeteilt ist. Der Kanalträger (20) ist in Form eines die Bereiche (A, B, C, D) umfassenden Steges (26) mit einem innenliegenden Kreuz als Trennsteg (27) für die Bereiche (A, B, C, D) ausgebildet und auf das unterhalb der Zeichnungsebene liegende Reagenzträgerband (12) aufgeklebt. Oberhalb der Zeichnungsebene ist über den Kanalträger (20) die nicht dargestellte Deckfolie (17) gezogen. Zum Nachweis von Schadstoffen wird die Deckfolie (17) entweder durchstochen, so daß einzelne Teilbereiche (A, B, C, D) der Umgebungsatmosphäre ausgesetzt werden können, oder sie wird einfach vollständig abgezogen, so daß alle Teilbereiche (A, B, C, D) zur gleichen Zeit exponiert werden.

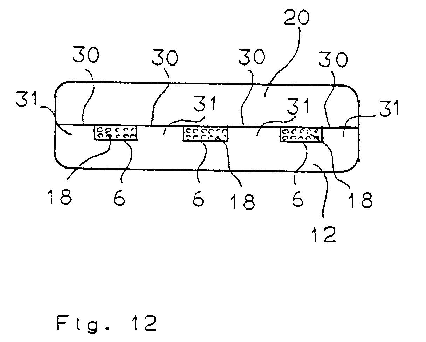

Für solche Fälle, bei denen kein kolorimetrischer Nachweis erforderlich oder gewünscht ist, sondern bei denen es lediglich darum geht, über einen bestimmten Zeitraum die nachzuweisende Komponente zu sammeln und mittels separater Analysemethoden zu bestimmen, ist ein Träger nach Figur 12 geeignet. Dieser besteht aus einem Reagenzträgerband (12) in Form einer Kunststoffplatte, in welcher die Kanäle (6), die hier im Querschnitt senkrecht zu ihrer Durchströmungs- bzw. Diffusionsrichtung gezeigt sind, eingearbeitet sind. Die Kanäle (6) sind mit einem Adsorbens (18) gefüllt, welches aus kleinen Körnern aus Aktivkohle besteht. Die so gefüllten Kanäle (6) sind gegeneinander und gegenüber der Umgebung durch einen Kanalträger (20) versiegelt und abgedeckt. Die Berührungsflächen (30) an den Stegen (31) zwischen dem Reagenzträgerband (12) und dem Kanalträger (20) sind durch Verklebung gasdicht gemacht. In Fig. 12 sind die Kanäle (6) in dem Reagenzträgerband (12) eingearbeitet und mit dem glattflächigen Kanalträger (20) abgedeckt; ebensogut können die Kanäle (6) in den Kanalträger (20) eingearbeitet sein, und das Reagenzträgerband (12) schließt die Kanäle (6) mit einer glatten, durchgehenden Oberfläche ab.

## Patentansprüche

1. Vorrichtung zum kolorimetrischen Nachweis von gas- und/oder dampfförmigen Komponenten in einem Gasgemisch, welches in eine oder mehrere kanalförmig in einen Träger eingearbeitete Reaktionszonen mit einem Kanalanschluß dringt, auf deren Grundfläche ein Farbindikator aufgebracht ist, mit dem die nachzuweisende Komponente eine Farbreaktion eingeht, dadurch gekennzeichnet, daß die die Reaktionszone (5, 18) enthaltende Grundfläche als ein sich längs der Reaktionskanäle (6) erstreckendes Reagenzträgerband (12) ausgeführt ist, auf welches der Indikator mit seinen zugehörigen Reagenzien flächig, den Kanalverlauf vorgebend, aufgebracht ist, und die mit einem die übrigen Seitenwände (23) des Reaktionskanals (6) bildenden Kanalträger (20) abgedeckt ist.

2. Vorrichtung nach Anspruch 1, dadurch gekennzeichnet, daß das Reagenzträgerband (12) und der Kanalträger (20) als Folien ausgestaltet sind, daß die Kanäle (6) einerseits von der Grundfläche der Reaktionszone (5, 18), und die Seitenwände andererseits von Durchbrüchen (23) in der Kanalträgerfolie (20) gebildet sind, daß die Kanäle (6) mit einer von dem für die Auswertung der Verfärbung notwendigen Strahlung durchdringenden Deckfolie (17) bedeckt sind, und daß Reagenzträgerfolie (12), Kanalträgerfolie (20) und Deckfolie (17) zu einem sandwichartigen Folienverbund (4) zusammengefügt sind.

3. Vorrichtung nach Anspruch 1 oder 2, dadurch gekennzeichnet, daß der Träger (1) aus einem Trägeroberteil (2) und einem Trägerunterteil (3) besteht, zwischen denen das Reagenzträgerband (12) ortsfest aufgenommen ist, wobei das Oberteil (2) und gegebenenfalls die Deckfolie (17) für die zur optischen Auswertung der Reaktionszonen (18) erforderliche Strahlung durchscheinend ist.

4. Vorrichtung zum kolorimetrischen Nachweis von gas- und/oder dampfförmigen Komponenten in einem Gasgemisch, welches in eine oder mehrere kanalförmig von einem Träger aufgenommene Reaktionszonen dringt, auf deren Grundfläche ein Farbindikator aufgebracht ist, mit dem die nachzuweisende Komponente eine Farbreaktion eingeht, dadurch gekennzeichnet, daß jeder Reaktionskanal (6) in Form einer mit einer Reagenzienauskleidung (18) als Reaktionszone versehenen Kapillarröhre den Kanalverlauf vorgebend auf einem Reagenzträgerband (12) aufgenommen ist, welches mit einem folienartigen Kanalträger (20) soweit abgedeckt ist, daß die offenen Enden der Kapillarröhren (6) gegenüber ihrer jeweils benachbarten Röhre (6) und gegenüber der Umgebung räumlich und strömungsmäßig getrennt sind, und daß der Kanalträger (20) mindestens eine Zutrittsöffnung (7) aufweist, durch den die nachzuweisende Komponente Zutritt zu der Kapillarröhre (6) erhält.

5. Vorrichtung nach einem der Ansprüche 1 bis 3, dadurch gekennzeichnet, daß die Reagenzträgerfläche aus einer Lochmatrix (12) besteht, und daß der Farbindikator auf Trägerkugeln (13) imprägniert ist, die einzeln in den Löchern (22) der Lochmatrix (12) haftend aufgenommen sind.

6. Vorrichtung nach Anspruch 5, dadurch gekennzeichnet, daß der Lochdurchmesser etwa 100 Mikrometer und der Kugeldurchmesser etwa 125 Mikrometer beträgt.

7. Vorrichtung nach einem der Ansprüche 1 bis 3, dadurch gekennzeichnet, daß die Reaktionszone (5, 18) in Form einer Beschichtung (19) gebildet ist, die von einer aus einem in einem Lösungsmittel gelösten Farbindikator bestehenden Suspension gewonnen und auf die Reagenzträgerfolie (12) aufgetragen ist.

8. Vorrichtung nach einem der Ansprüche 1 bis 7, dadurch gekennzeichnet, daß zumindest die Trägerfolie (12) aus einem der Stoffe Keramik, Glas oder Metall besteht.

9. Vorrichtung nach einem der Ansprüche 1 bis 3 oder 7, dadurch gekennzeichnet, daß die Reagenzträgerfolie (12) aus dem Material Perfluorpropylenethylen (FEP) besteht.

10. Vorrichtung nach Anspruch 5 oder 6, dadurch gekennzeichnet, daß die Kugeln (13) aus Silicagel, oder Aluminiumoxid oder Glas bestehen.

11. Vorrichtung nach einem der Ansprüche 1 bis 10, dadurch gekennzeichnet, daß die Reaktionszonen (5, 18) in mehrere hintereinander aufgebrachte Teilbereiche (A, B; C, D) unterteilt ist, die sich durch verschiedenartige Reaktionsteilnehmer unterscheiden.

12. Vorrichtung nach Anspruch 11, dadurch gekennzeichnet, daß dem den Farbindikator als Reaktionsteilnehmer enthaltenden Teilbereich (B) ein Umwandlungsbereich (A) vorgeschaltet ist, der ein Reagenz enthält, durch das die nachzuweisende Komponente in ein die Farbreaktion ermöglichendes Reaktionsprodukt umwandelbar ist.

13. Vorrichtung zum kolorimetrischen Nachweis von gas- und/oder dampfförmigen Komponenten in einem Gasgemisch, welches in eine oder mehrere, in einen Träger eingearbeitete Reaktionszonen dringt, auf deren Grundfläche ein Farbindikator aufgebracht ist, mit dem die nachzuweisende Komponente eine Farbreaktion eingeht, dadurch gekennzeichnet, daß die Reaktionszone (5, 18) in Teilbereiche (A, B, C, D) aufgeteilt auf einem Reagenzträgerband (12) aufgetragen ist, auf welches ein Kanalträger (20) positioniert ist, der die Reaktionszone (5, 18) von der Umgebung und gegebenenfalls die Teilbereiche (A, B, C, D) untereinander abtrennt.

14. Vorrichtung nach Anspruch 13, dadurch gekennzeichnet, daß der Kanalträger einen die Reaktionszone (5, 18) umfassenden Randsteg (26) und die Teilbereiche (A, B, C, D) voneinander trennenden Trennstege (27) besitzt, und daß die Reaktionszone (18) durch eine Deckfolie (17) zur Umgebung hin abgeschlossen ist.

15. Vorrichtung zum Nachweis von gas- und/oder dampfförmigen Komponenten in einem Gasgemisch, welches in eine oder mehrere kanalförmig in einen Träger eingearbeitete Reaktionszonen mit einem Kanalanschluß dringt, von denen jede eine Nachweissubstanz enthält, mit welcher die nachzuweisende Komponente eine Bindung einzugehen in der Lage ist, dadurch gekennzeichnet, daß die Reaktionszonen als offene Reaktionskanäle (6) in den als Reagenzträgerband (12) ausgebildeten Träger eingearbeitet und mit einem die nachzuweisende Komponente zurückhaltenden Adsorbens (18) als Nachweissubstanz gefüllt sind, und daß das Reagenzträgerband (12) mit einem die Kanäle (6) abdeckenden Kanalträger (20) versehen sind, durch den die Kanäle (6) voneinander und zur Umgebung hin versiegelt sind, wobei der jeweilige Kanalanschluß (9) zugänglich bleibt.

16. Vorrichtung nach Anspruch 15, dadurch gekennzeichnet, daß das Adsorbens (18) als eine Füllung aus Aktivkohle, oder aus einem organischen Polymer, oder aus einem Molekularsieb (Zeolith), oder aus einer aufeinanderfolgenden Schichtung der genannten Füllungen in die Reaktionskanäle (6) eingebracht ist.

17. Vorrichtung nach Anspruch 16 oder 17, dadurch gekennzeichnet, daß das Reagenzträgerband (12) mit dem Kanalträger (20) lösbar verbunden ist.
